# EUROPÄISCHE PATENTSCHRIFT

(11) **EP 1 556 195 B1**
(45) Veröffentlichungstag und Bekanntmachung des Hinweises auf die Patenterteilung: **26.04.2006**
(21) Anmeldenummer: 03750667.2
(22) Anmeldetag: 01.10.2003
(51) Int. Cl.: B27K 3/08, B27K 3/15, B27K 3/34, B27K 3/42, B27K 3/52, B27K 5/06

(54) **VERFAHREN ZUR VERBESSERUNG DER DAUERHAFTIGKEIT, DIMENSIONSSTABILITÄT UND OBERFLACHENHÄRTE EINES HOLZKÖRPERS**
METHOD FOR IMPROVING THE DURABILITY, DIMENSIONAL STABILITY AND SURFACE HARDNESS OF A WOODEN BODY
PROCEDE POUR AMELIORER LA DURABILITE, LA STABILITE DIMENSIONNELLE ET LA DURETE SUPERFICIELLE D'UN CORPS EN BOIS

(30) Priorität: 04.10.2002 DE 10246401
(43) Veröffentlichungstag der Anmeldung: 27.07.2005
(73) Patentinhaber: BASF Aktiengesellschaft, 67056 Ludwigshafen (DE)
(72) Erfinder: KRAUSE, Andreas, 37077 Göttingen (DE); MILITZ, Holger, 37120 Bovenden (DE)
(86) Internationale Anmeldenummer: PCT/EP2003/010874
(87) Internationale Veröffentlichungsnummer: WO 2004/033170

(56) Entgegenhaltungen:
- SE-C- 500 039
- US-A- 4 005 039
- US-A- 4 396 391
- US-A- 4 908 238
- US-A- 5 384 012

## Beschreibung

Die Erfindung betrifft ein Verfahren zur Herstellung eines Holzkörpers mit erhöhter Dauerhaftigkeit, Dimensionsstabilität und Oberflächenhärte, bei dem man einen unbehandelten Holzkörper mit einer wässrigen Lösung eines
A) Imprägniermittels aus der Gruppe 1,3- Bis(hydroxymethyl)-4,5-dihydroxyimidazolidinon-2, mit einem C₁₋₅-Alkohol, einem Polyol oder deren Gemischen modifiziertes 1,3- Bis(hydroxymethyl)-4,5-dihydroxyimidazolidinon-2, 1,3-dimethyl-4,5-dihydroxyimidazolidinon-2, Dimethylolharnstoff, Bis(methoxymethyl)harnstoff, Tetramethylolacetylenediharnstoff, 1,3-Bis(hydroxymethyl)imidazolidinon-2, Methylolmethylharnstoff oder deren Gemische, und
B) eines Katalysators aus der Gruppe der Metall- oder Ammoniumsalze, organischen oder anorganischen Säuren oder deren Gemische,
imprägniert und anschließend unter Aufrechterhaltung feuchter Bedingungen bei erhöhter Temperatur aushärtet.

Die Erfindung bezieht sich insbesondere auf Holzkörper größerer Abmessungen. Unter einem Holzkörper wird eine Formkörper aus Vollholz verstanden. Aus dem Holzkörper und dem Imprägniermittel soll gleichsam ein Verbundwerkstoff entstehen, bei dem die positiven Eigenschaften des natürlichen Werkstoffs Holz, insbesondere das ästhetische Aussehen, beibehalten bleiben, jedoch eine oder mehrere physikalische und biologische Eigenschaften wesentlich verbessert werden.

Aus der Veröffentlichung "Treatment of timber with water soluble dimethylol resins to improve the dimensional stability and durability", erschienen in Wood Science and Technology 1993, Seiten 347-355, ist es bekannt, zur Verbesserung der Schwind- und Quelleigenschaften von Holz sowie des Widerstandes gegen Pilze und Insekten dieses mit einem Imprägniermittel zu behandeln, das aus einer wässrigen Lösung von Dimethyloldihydroxyethylenharnstoff (DMDHEU oder 1,3- Bis(hydroxymethyl)-4,5-dihydroxyimidazolidinon-2) und einem Katalysator besteht. Als Katalysatoren werden dabei Metallsalze, Zitronensäure und Aminsalze, einzeln oder in Kombination eingesetzt. Das DMDHEU wird in der wässrigen Lösung in Konzentrationen zwischen 5 % und 20 % eingesetzt. Die hinzugefügte Katalysatormenge beträgt 20 %, bezogen auf das DMDHEU. Die Imprägnierung geschieht unter Vakuum. Bei erhöhter Temperatur findet eine Reaktion des DMDHEU mit sich selbst und dem Holz statt. Diese Reaktion läuft während einer Stunde in einem Trockenofen bei Temperaturen von 80 °C oder 100 °C ab.. Die so behandelten Holzproben weisen eine Verbesserung der Schwind- und Quelleigenschaften bis zu 75 % auf, und zwar bei Konzentrationen des DMDHEU von 20 %. Auf diese Weise wurden Holzkörper mit Abmessungen von 20 mm x 20 mm x 10 mm untersucht. Das beschriebene Verfahren lässt sich nur bei kleinen Abmessungen der Holzkörper anwenden, weil die behandelten Hölzer bei größeren Abmessungen zu Rissbildung neigen.

Aus der Veröffentlichung von W. D. Ellis, J. L. O'Dell "Wood-Polymer Composites Made with Acrylic Monomers, Isocyanate, and Maleic Anhydride", veröffentlicht in Journal of Applied Polymer Science, Vol. 73, Seiten 2493-2505 (1999) ist es bekannt, natürliches Holz mit einer Mischung aus Acrylaten, Isocyanat und Maleinsäureanhydrid unter Vakuum zu behandeln. Die eingesetzten Stoffe reagieren mit sich selbst, nicht jedoch mit dem Holz. Durch eine solche Imprägnierung erhöht sich die Dichte, die Härte und der Widerstand gegen Wasserdampfdiffusion. Auch die Wasserabweisung und die Dimensionsstabilität des Holzes werden verbessert.

Aus der EP-B 0 891 244 ist es bekannt, Holzkörper aus Vollholz mit einem biologisch abbaubaren Polymer, einem Naturharz und/oder einem Fettsäureester - gegebenenfalls unter Anwendung von Vakuum und/oder Druck - zu imprägnieren. Die Imprägnierung geschieht unter erhöhten Temperaturen. Dabei werden die Poren im Holz zumindest weitgehend gefüllt, und es entsteht ein Formkörper, der sowohl Holz wie auch biologisch abbaubares Polymer enthält. Eine Reaktion des Polymers mit dem Holz findet nicht statt. Mit dieser Behandlung gehen die charakteristischen Eigenschaften von Holz, die Bioabbaubarkeit sowie die mechanischen Eigenschaften nicht verloren. Die Thermoplastizität kann gesteigert werden. Je nach dem eingebrachten Polymeranteil ergibt sich eine Erhöhung der Oberflächenhärte durch die Einlagerung des Polymers in die Holzmatrix, sodass von Natur aus weiche Hölzer auch für hochwertige Fußböden geeignet sind.

Aus der SE-C 500 039 ist ein Verfahren zur Härtung von Holz unter Verdichtung beschrieben, bei dem unbehandeltes Holz mit verschiedenen Aminoplastmonomeren auf Basis von Melamin und Formaldehyd mittels Vakuumdruckimprägnierung getränkt, anschließend getrocknet und in einer Presse unter Verdichtung bei erhöhter Temperatur ausgehärtet werden. Als Vernetzer werden unter anderem DMDHEU, Dimethylolharnstoff, Dimethoxymethylhamstoff, Dimethylolethylenhamstoff, Dimethylolpropylenhamstoff sowie Dimethoxymethyluron genannt.
Dieses Verfahren hat den Nachteil eines energieaufwendigen Trocknungsschrittes. Darüberhinaus geht die natürliche Holzstruktur durch die Verdichtung verloren.

Der Erfindung lag die Aufgabe zugrunde, ein Verfahren zur Verbesserung der Dauerhaftigkeit, Dimensionsstabilität und Oberflächenhärte eines Holzkörpers auch mit größeren Dimensionen zur Verfügung zu stellen, das die Nachteile des Standes der Technik nicht aufweist, insbesondere zu keiner Rissbildung im Holz führt, und das Holzkörper liefert, bei denen die natürliche Holzstruktur erhalten bleibt.

Die Aufgabe der Erfindung wird erfindungsgemäß mit dem eingangs beschriebenen Verfahren gelöst. Die nach diesem Verfahren hergestellten Holzkörper sind für verschiedene vorteilhafte Anwendungsmöglichkeiten überall dort geeignet, wo Holz der Feuchtigkeit und Bewitterung ausgesetzt ist, insbesondere beim Einsatz als Fensterkanteln, Fassadenbretter oder Treppenstufen.

Bei dem Verfahren der vorliegenden Erfindung geht es um die Verbesserung mehrerer Eigenschaften von Holzkörpern mit größeren Abmessungen, beispielsweise mit einer Breite von 30 bis 200 mm und einer Dicke von 30 bis 100 mm. Bei der Imprägnierung des unbehandelten Holzes mit dem Imprägniermittel A) und gegebenenfalls C) und anschließender Aushärtung nach dem erfindungsgemäßen Verfahren trat überraschenderweise keine Rissbildung auf, und zwar auch nicht bei größeren Abmessungen der Holzkörper. Eine solche Imprägnierung mit anschließender Aushärtung verbessert gleichzeitig die Dauerhaftigkeit, Dimensionsstabilität und die Oberflächenhärte des Holzkörpers.

Als Imprägniermittel A) für Holzkörper sind geeignet 1,3- Bis(hydroxymethyl)-4,5-dihydroxyimidazolidinon-2, mit einem C₁₋₅-Alkohol, einem Polyol oder deren Gemischen modifiziertes 1,3- Bis(hydroxymethyl)-4,5-dihydroxyimidazolidinon-2, 1,3-dimethyl-4,5-dihydroxyimidazolidinon-2, Dimethylolharnstoff, Bis(methoxymethyl)harnstoff, Tetramethylolacetylenedihamstoff, 1,3-Bis(hydroxymethyl)imidazolidinon-2, Methylolmethylharnstoff oder deren Gemische.

Besonders geeignet sind 1,3- Bis(hydroxymethyl)-4,5-dihydroxyimidazolidinon-2 oder mit einem C₁₋₅-Alkohol, einem Polyol oder deren Gemischen modifiziertes 1,3-Bis(hydroxymethyl)-4,5-dihydroxyimidazolidinon-2 oder deren Gemische.
Ganz besonders geeignet als Imprägnierungsmittel A) ist mit einem C₁₋₅-Alkohol, einem Polyol oder deren Gemischen modifiziertes 1,3- Bis(hydroxymethyl)-4,5-dihydroxyimidazolidinon-2.

Modifiziertes 1,3-Bis(hydroxymethyl)-4,5-dihydroxyimidazolidinon-2 (mDMDHEU) ist beispielsweise aus der US 4,396,391 und der WO 98/29393 bekannt. Dabei handelt es sich um Umsetzungsprodukte von 1,3- Bis(hydroxymethyl)-4,5-dihydroxyimidazolidinon-2 mit einem C₁₋₅-Alkohol, einem Polyol oder deren Gemische. Geeignete C₁₋₅-Alkohole sind beispielsweise Methanol, Ethanol, n-Propanol, iso-Propanol, n-Butanol und n-Pentanol, bevorzugt ist Methanol.
Geeignete Polyole sind Ethylenglykol, Diethylenglykol, 1,2-und 1,3-Propylenglykol, 1,2-, 1,3-, und 1,4-Butylenglykol, Glycerin und Polyethylenglykole der Formel HO(CH₂CH₂O)ₙH mit n von 3 bis 20, bevorzugt ist Diethylenglykol.

Zur Herstellung der Derivate des 1,3-Bis(hydroxymethyl)-4,5-dihydroxylmidazolidinon-2 (mDMDHEU) werden DMDHEU und der einwertige Alkohol und/oder das Polyol gemischt, wobei der einwertige Alkohol und/oder das Polyol in einer Menge von je 0,1 bis 2,0 Moläquivalenten, bezogen auf DMDHEU, eingesetzt werden. Die Mischung aus DMDHEU, einwertigem Alkohol und/oder Polyol wird bei Temperaturen von 20 bis 70°C und einem pH-Wert von 1 bis 2,5 umgesetzt, wobei der pH-Wert nach der Umsetzung auf 4 bis 8 eingestellt wird.

Geeignete Imprägniermittel C) sind C₁₋₅-Alkohole, Polyole oder deren Gemische wie beispielsweise Methanol, Ethanol, n-Propanol, iso-Propanol, n-Butanol, n-Pentanol, Ethylenglykol, Diethylenglykol, 1,2- und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemische.

Bevorzugt sind Methanol, Diethylenglykol oder deren Gemische.

Das Imprägniermittel A) und gegebenenfalls C) werden in einer Konzentration von 1 bis 60 Gew.%, bevorzugt 10 bis 40 Gew.% , bezogen auf die wässrige Imprägniermittellösung, angewendet.

Wird das Imprägniermittel C) mitverwendet, so ist 1 bis 50 Gew. %, bezogen auf das Imprägniermittel A), bevorzugt.

Geeignete Katalysatoren B) sind Metallsalze aus der Gruppe Metallhalogenide, Metallsulfate, Metallnitrate, Metalltetrafluoroborate, Metallphosphate oder deren Gemische. Beispiele sind Magnesiumchlorid, Magnesiumsulfat, Zinkchlorid, Lithiumchlorid, Lithiumbromid, Bortrifluorid, Aluminiumchlorid, Aluminiumsulfat, Zinknitrat, Natriumtetrafluoroborat oder deren Gemische.
Geeignete Katalysatoren B) sind auch Ammoniumsalze aus der Gruppe Ammoniumchlorid, Ammoniumsulfat, Ammoniumoxalat, Diammoniumphosphat oder deren Gemische.
Weitere geeignete Katalysatoren B) sind organische oder anorganische Säuren. Geeignete Beispiele sind Maleinsäure, Ameisensäure, Zitronensäure, Weinsäure, Oxalsäure, p-Toluolsulfonsäure, Salzsäure, Schwefelsäure, Borsäure oder deren Gemische.
Bevorzugt werden Magnesiumchlorid, Zinkchlorid, Magnesiumsulfat, Aluminiumsulfat verwendet.
Besonders bevorzugt ist Magnesiumchlorid.

Bei dem Verfahren der vorliegenden Erfindung kann die Imprägnierung unter Vakuumeinwirkung mit anschließender Druckeinwirkung durchgeführt werden. Dabei wird der Holzkörper in einer Tränkanlage einem Vakuum von 10 bis 100 mbar für einen Zeitraum von 10 Minuten bis 2 Stunden, bevorzugt etwa 30 min, je nach Abmessungen des Holzkörpers, ausgesetzt und danach mit dem Imprägniermittel geflutet. Als Vorteilhaft hat sich ein Vakuum von etwa 50 mbar für etwa eine Stunde erwiesen. Alternativ kann der Holzkörper in der Tränkanlage aber auch zuerst mit dem Imprägniermittel geflutet werden und danach einem Vakuum von 10 bis 100 mbar für den obengenannten Zeitraum ausgesetzt werden.
Danach erfolgt die Druckeinwirkung bei Drücken von 2 bis 20 bar, bevorzugt 10 bis 12 bar, je nach Abmessungen des Holzkörpers über einen Zeitraum von 10 Minuten bis 2 Stunden, bevorzugt etwa eine Stunde. Das Vakuumdruckverfahren ist insbesondere in Verbindung mit hohen Gewichtsanteilen des Imprägniermittels sinnvoll.

Nach der Druckphase wird die Restflüssigkeit entfernt und der imprägnierte Holzkörper ohne Zwischentrocknung ausgehärtet. Von besonderer Bedeutung ist die Aufrechterhaltung feuchter Bedingungen während der Aushärtung des Imprägniermittels, so dass damit eine Trocknung während dieser Reaktion vermieden wird. Das in das Holz eingebrachte Imprägniermittel wird somit unter feuchten Bedingungen und unter Vermeidung einer Trocknung zur Reaktion mit sich selbst und dem Holz gebracht. Feuchte Bedingungen bedeutet in diesem Zusammenhang ein Wassergehalt des Holzes über dem Fasersättigungspunkt, der bei etwa 30% Wasser im Holz liegen kann, je nach Holzart. Das Holz kann durch die Imprägnierung bis zu 200% wässriges Imprägniermittel aufnehmen.

Um die feuchten Bedingungen während der Aushärtung zu gewährleisten, wird der imprägnierte Holzkörper in einer über Luftfeuchtigkeit, Temperatur und Druck steuerbaren Trockenkammer gelagert und so fixiert, dass einem Verwerfen entgegengewirkt wird. Bei einer rel. Luftfeuchtigkeit von 40 bis 100%, bevorzugt 50 bis 100%, besonders bevorzugt 80 bis 100% und einer Temperatur von 70 bis 130°C, bevorzugt 80 bis 100°C wird der imprägnierte Holzkörper über einen Zeitraum von 1 bis 72 Stunden, bevorzugt 1 bis 48 Stunden, je nach Abmessungen des Holzkörpers, ausgehärtet, wobei das Imprägniermittel A) und gegebenenfalls C) mit dem Holz und sich selbst reagiert.
Die Einhaltung einer rel. Luftfeuchtigkeit von über 40%, bevorzugt über 50% und besonders bevorzugt über 80 bis 100% dient dazu, ein Trocknen des Holzkörpers während des Aushärtens unter den Fasersättigungspunkt zu vermeiden.

Ein Fachmann hätte den imprägnierten Holzkörper in jedem Fall vor der Aushärtung getrocknet, weil er sonst ein Reißen des Holzkörpers erwartet hätte. Somit ist das Überraschende an dem vorliegenden Verfahren, dass der Holzkörper auch ohne Vortrocknung nicht zur Rissbildung neigt. Das gilt im Besonderen für Holzkörper mit größeren Abmessungen, beispielsweise mit einer Breite von 30 bis 200 mm und einer Dicke von 30 bis 100 mm.

Nach dem Aushärten werden die Holzkörper getrocknet, wobei mit geeigneten Mitteln einer Verwerfung des Holzes entgegengewirkt wird und die physikalischen Daten gemessen.

### Anwendungsbeispiel 1

Es wurden Fensterkanteln aus *Pinus radiata* hergestellt , also profilierte Formkörper, die bei der Herstellung von Fensterrahmen eingesetzt werden können.

Mit Diethylenglykol und Methanol modifiziertes DMDHEU (mDMDHEU) wird auf 30 Gew.-% mit Wasser verdünnt und mit 1,5 % MgCl₂ x 6 H₂O vermischt. Die auf ca. 12 % Holzfeuchte getrockneten Holzkörper wurden in eine Tränkanlage eingebracht. Die Tränkanlage wurde für 30 Minuten einem Vakuum von absolut 40 mbar ausgesetzt. Anschließend erfolgte die Flutung der Tränkanlage mit dem Imprägniermittel. Das Vakuum von absolut 50 mbar wurde konstant gehalten. Anschließend wurde ein Druck von 10 bar für 2 Stunden angelegt. Die Druckphase wurde beendet und die Restflüssigkeit entfernt.
Die Holzkörper wurden sodann in einer über Temperatur und Luftfeuchtigkeit steuerbaren Trockenkammer gelagert und so fixiert, dass ein Verwerfen unmöglich war. Die Kammer wurde auf 95 °C und eine relative Luftfeuchtigkeit von ca. 95 % gebracht. Diese feuchten Bedingungen wurden solange gehalten, bis 48 Stunden lang im Innern der Holzkörper eine Temperatur von mindestens 90°C erreicht wurde. Das anschließende Trocknen der Holzkörper wurde auf einem gut belüfteten Holzstapel durchgeführt. Anschließend wurden die Kanteln weiterverarbeitet.

### Quellen und Schwinden der behandelten Kanteln:

Die so behandelten Kanten zeichneten sich durch ein stark verringertes Quellen und Schwinden bei Luftfeuchtigkeitsänderungen (Dimensionsstabilität) gegenüber den unbehandelten Kanteln aus.

**Tabelle 1**

| Holzart | Quellung von 0% Luftfeuchtigkeit bis 96% Luftfeuchtigkeit | Relative Verbesserung |
|---|---|---|
| Unbeharideltes Kiefernsplintholz | 13,6% | |
| Behandeltes Kiefernsplintholz | 7,5% | 45 % |

Der Vorteil einer solchen Behandlung bei Einsatz im Fensterbau ist, dass die Bildung von offenen Fugen, die durch Quellen und Schwinden entstehen und langfristig zur Zerstörung des Fensters führen, vermindert wird und so die Lebensdauer von Holzfenstern erhöht wird.

Zusätzlich wird das Holz gegen abiotischen Abbau durch UV-Licht und/ oder Regenwasser geschützt. Dies wurde an Kiefersplint in Außenbewitterung untersucht. Die Ergebnisse nach einem Jahr zeigen folgende Bilder:

Unbehandelt vor Bewitterung:

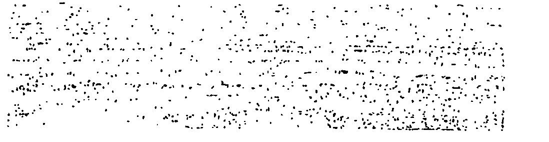

Unbehandelt nach 1 Jahr Bewitterung:

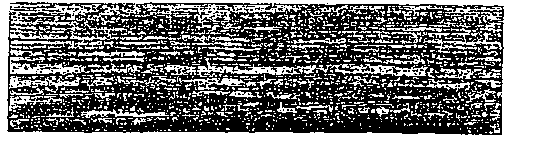

Behandelt vor Bewitterung:

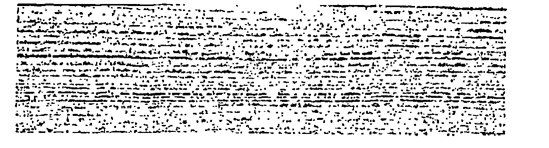

Behandelt nach 1 Jahr Bewitterung:

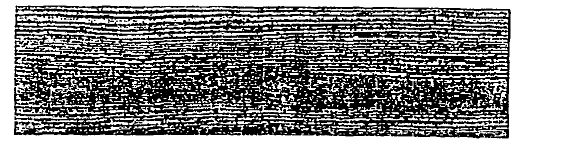

Es ist klar zu sehen, dass die oben genannte Behandlung zu einer deutlichen Verbesserung der Bewitterungsbeständigkeit geführt hat. So sind erheblich geringe Rissbildung, eine deutlich verringerte Vergrauung und ein wesentlich geringerer Abtrag auf der Holzoberfläche zu beobachten.

### Anwendungsbeispiel 2

Hier wurden Rundpfähle aus Kiefer so behandelt, dass damit Palisaden errichtet werden können.

DMDHEU wurde auf ca. 15 Gew.-% mit Wasser verdünnt und mit 0,75 % ZnNO₃ x 6 H₂O vermischt. Die auf ca. 20 % Holzfeuchte getrockneten runden Holzkörper mit ungefähr gleichen Dimensionen wurden in einer Tränkanlage eingebracht. Diese Tränkanlage wurde mit dem Imprägniermittel geflutet und für 30 Minuten einem Vakuum von absolut 40 mbar ausgesetzt. Anschließend wurde ein Druck von 10 bar für 2 Stunden angelegt. Die Druckphase wurde beendet und die Restflüssigkeit entfernt.
Die Holzkörper wurden sodann in einer über Temperatur und Luftfeuchtigkeit steuerbaren Trockenkammer gelagert und so fixiert, dass ein Verwerfen unmöglich wurde. Die Trockenkammer wurde auf 98 °C und eine relative Luftfeuchtigkeit von ca. 80 % gebracht. Die Bedingungen wurden solange gehalten, bis 30 Stunden lang im Innern der Holzkörper eine Temperatur von mindestens 95 °C erreicht wurde. Anschließend wurden die Holzkörper auf einem gut belüfteten Holzstapel im Freien getrocknet.

### Dauerhaftigkeit der behandelten Prüfkörper:

Für die Dauerhaftigkeit von Palisaden ist der Widerstand gegen Moderfäule (Erdkontakt) von sehr hoher Bedeutung. Besonders wichtig ist der auftretende Festigkeitsverlust z.B. der Verlust des E-Modules.

**Tabelle 2**

| Holz | E-Modul Versuchsbegin n | E-Modul nach 32 Wochen | E-Modulverlust | Masseverlust |
|---|---|---|---|---|
| Unbehandelt | 8309 N/mm² | 4096 N/mm² | 51% | 18% |
| behandelt | 8419 N/mm² | 8272 N/mm² | 2% | 2% |

Dieser Versuch wurde nach der ENv807 durchgeführt. Die Proben unterlagen dem Abbau im Erdkontakt, unter für die Organismen optimierten Bedingungen.

### Anwendungsbeispiel 3

Es wurden Bretter aus Gummibaumholz behandelt, um daraus Gartenmöbel oder Gartendecks herzustellen.

Mit Diethylenglykol und Methanol modifiziertes DMDHEU (mDMDHEU) wurde auf 40 Gew.-% mit H₂O verdünnt und mit 2 Gew.-% Al₂(SO₄)₃ x 16 H₂O vermischt. Die auf ca. 12 Gew.-% Holzfeuchte getrockneten Bretter wurden in eine Tränkanlage eingebracht. Diese wurde mit dem Imprägniermittel geflutet und für 1 Stunde einem Vakuum von absolut 40 mbar ausgesetzt. Anschließend wurde ein Druck von 10 bar für 2 Stunden angelegt. Nach Beendigung der Druckphase wurde die Restflüssigkeit entfernt.

Die Formkörper wurden in gesättigter Wasserdampfatmosphäre auf ca. 90 °C erhitzt. Dies wurde durch Verpacken der Holzkörper in Folie erreicht, die bei dieser Temperatur beständig bleibt. Die Dauer der Temperatureinwirkung war abhängig von der Holzart und den Abmessungen der Holzkörper. Bei 3 bis 6 cm dicken Holzkörpern betrug die Reaktionszeit ca. 48 Stunden.
Das Holz wurde nach der Reaktion in Stapeln so fixiert, dass ein Verwerfen unmöglich gemacht wurde. Es folgte ein Trocknungsvorgang bei einer Temperatur von etwa 50 °C und einer Dauer von 14 Tagen. Hierzu konnte eine herkömmliche Trockenkammer eingesetzt werden.

### Dauerhaftigkeit der so behandelten Holzkörper:

Gartenutensilien aus Holz (Möbel oder Decks) die nicht dem Erdkontakt ausgesetzt sind unterliegen einem Abbau durch bestimmte Pilze und der abiotischen Verwitterung. Der Abbau gegenüber holzzerstörenden Pilzen wurde vergleichbar zur EN 113 untersucht:

**Tabelle 3**

| Holz | Masseverlust nach 8 Wochen |
|---|---|
| Unbehandelt | 34% |
| Behandelt | 1% |

### Anwendungsbeispiel 4

Es wurden hier Treppenstufen aus massivem Holz, beispielsweise Buche, hergestellt. Diese Stufen wiesen Abmessungen von 1000 mm x 400 mm x 80 mm auf. Besonderer Wert wurde dabei auf eine erhöhte Oberflächenhärte der Treppenstufen gelegt.

DMDHEU wurde in einer handelsüblichen wässrigen Lösung auf 60 Gew.-% mit H₂O verdünnt und mit 1,5 Gew.-% MgCl₂ x 6 H₂O vermischt. Die auf ca. 12 % Holzfeuchte getrockneten Treppenstufen mit ungefähr gleichen Dimensionen wurden in einer Tränkanlage eingebracht, die mit dem Imprägniermittel geflutet wurde. In der Tränkanlage wurde für 1 Stunde ein Vakuum von absolut 40 mbar eingestellt. Anschließend wurde die Tränkanlage unter einen Druck von 10 bar für 2 Stunden gebracht. Nach Beendigung der Druckphase wurde die Restflüssigkeit entfernt.
Die Treppenstufen wurden in wassergesättigter Atmosphäre auf etwa 95 °C erhitzt. Die Dauer der Temperatureinwirkung war abhängig von der Holzart und den Abmessungen der Stufen. Bei Stufen mit einer Dicke von 80 mm betrug die Reaktionszeit ca. 60 Stunden.

Das Holz wurde nach der Reaktion in Stapeln so fixiert, dass ein Verwerfen unmöglich gemacht wurde. Es folgte ein Trocknungsvorgang bei einer Temperatur von etwa 50 °C und einer Dauer von 14 Tagen. Hierzu wurde eine herkömmliche Trockenkammer verwendet.

### Oberflächenhärte von so behandelten Holzproben:

Die Oberflächenhärte der Holzproben wurde mittels der Brinellhärtemethode EN 1534 bestimmt.

**Tabelle 4**

| Holz | Brinellhärte | Verbesserung |
|---|---|---|
| Unbehandelt | 35 N/mm² | |
| Behandelt | 112 N/mm² | 220% |

## Patentansprüche

1. Verfahren zur Herstellung eines Holzkörpers mit erhöhter Dauerhaftigkeit, Dimensionsstabilität und Oberflächenhärte, in dem man einen unbehandelten Holzkörper mit einer wässrigen Lösung eines
A) Imprägniermittels aus der Gruppe 1,3- Bis(hydroxymethyl)-4,5-dihydroxyimidazolidinon-2, mit einem C₁₋₅-Alkohol, einem Polyol oder deren Gemischen modifiziertes 1,3- Bis(hydroxymethyl)-4,5-dihydroxyimidazolidinon-2, 1,3-dimethyl-4,5-dihydroxyimidazolidinon-2, Dimethylolharnstoff, Bis(methoxymethyl)harnstoff, Tetramethylolacetylenedihamstoff, 1,3-Bis(hydroxymethyl)imidazolidinon-2, Methylolmethylharnstoff oder deren Gemische, und
B) eines Katalysators aus der Gruppe der Metall- oder Ammoniumsalze, organischen oder anorganischen Säuren oder deren Gemische, imprägniert **dadurch gekennzeichnet daß** man den Holzkörper nach der Imprägnierung unter Aufrechterhaltung feuchter Bedingungen bei erhöhter Temperatur aushärtet.

2. Verfahren nach Anspruch 1, **dadurch gekennzeichnet, dass** man als Imprägniermittel
A) 1,3- Bis(hydroxymethyl)-4,5-dihydroxyimidazolidinon-2, mit einem C₁₋₅-Alkohol, einem Polyol oder deren Gemischen modifiziertes 1,3- Bis(hydroxymethyl)-4,5-dihydroxyimidazolidinon-2 oder deren Gemische verwendet.

3. Verfahren nach Anspruch 1 oder 2, **dadurch gekennzeichnet, dass** man als Imprägniermittel A) mit einem C₁₋₅-Alkohol, einem Polyol oder deren Gemischen modifiziertes 1,3- Bis(hydroxymethyl)-4,5-dihydroxyimidazolidinon-2, verwendet.

4. Verfahren nach einem der Ansprüche 1 bis 3, **dadurch gekennzeichnet, dass** man ein Imprägniermittel C) aus der Gruppe eines C₁₋₅-Alkohols, eines Polyols oder deren Gemische mitverwendet.

5. Verfahren nach Anspruch 4, **dadurch gekennzeichnet, dass** man Methanol, Ethanol, n-Propanol, iso-Propanol, n-Butanol, n-Pentanol, Ethylenglykol, Diethylenglykol, 1,2-und 1,3-Propylenglykol, 1,2-, 1,3-, und 1,4-Butylenglykol, Glycerin, Polyethylenglykole der Formel HO(CH₂CH₂O)ₙH mit n von 3 bis 20 oder deren Gemische mitverwendet.

6. Verfahren nach Anspruch 5, **dadurch gekennzeichnet, dass** man Methanol, Diethylenglykol oder deren Gemische mitverwendet.

7. Verfahren nach einem der Ansprüche 1 bis 6, **dadurch gekennzeichnet, dass** man das Imprägniermittel A) und gegebenenfalls C) in einer Konzentration von 1 bis 60 Gew.% in der wässrigen Lösung anwendet.

8. Verfahren nach einem der Ansprüche 1 bis 7, **dadurch gekennzeichnet, dass** man als Katalysator B) Metallsalze aus der Gruppe Metallhalogenide, Metallsulfate, Metallnitrate, Metalltetrafluoroborate, Metallphosphate oder deren Gemische verwendet.

9. Verfahren nach Anspruch 8, **dadurch gekennzeichnet, dass** man als Katalysator B) Metallsalze aus der Gruppe Magnesiumchlorid, Magnesiumsulfat, Zinkchlorid, Lithiumchlorid, Lithiumbromid, Bortrifluorid, Aluminiumchlorid, Aluminiumsulfat, Zinknitrat, Natriumtetrafluoroborat oder deren Gemische verwendet.

10. Verfahren nach einem der Ansprüche 1 bis 9, **dadurch gekennzeichnet, dass** man als Katalysator B) Ammoniumsalze aus der Gruppe Ammoniumchlorid, Ammoniumsulphat, Ammoniumoxalat, Diammoniumphosphat oder deren Gemische verwendet.

11. Verfahren nach einem der Ansprüche 1 bis 10, **dadurch gekennzeichnet, dass** man als Katalysator B) organische oder anorganische Säuren aus der Gruppe Maleinsäure, Ameisensäure, Zitronensäure, Weinsäure, Oxalsäure, p-Toluolsulfonsäure, Salzsäure, Schwefelsäure, Borsäure oder deren Gemische verwendet.

12. Verfahren nach einem der Ansprüche 1 bis 11, **dadurch gekennzeichnet, dass** man als Katalysator B) Magnesiumchlorid verwendet.

13. Verfahren nach einem der Ansprüche 1 bis 12, **dadurch gekennzeichnet, dass** man den Katalysator B) in einer Konzentration von 0,1 bis 10 Gew.%, bezogen auf die Menge des Imprägniermittels A) und gegebenenfalls C), verwendet.

14. Verfahren nach einem der Ansprüche 1 bis 13, **dadurch gekennzeichnet, dass** man den imprägnierten Holzkörper bei einer relativen Luftfeuchtigkeit von 50 bis 100% aushärtet.

15. Verfahren nach Anspruch 14, **dadurch gekennzeichnet, dass** man den imprägnierten Holzkörper bei einer relativen Luftfeuchtigkeit von 80 bis 100% aushärtet.

16. Verfahren nach einem der Ansprüche 1 bis 15, **dadurch gekennzeichnet, dass** man den imprägnierten Holzkörper bei einer Temperatur von 70 bis 130°C aushärtet.

17. Verfahren nach einem der Ansprüche 1 bis 16, **dadurch gekennzeichnet, dass** man den imprägnierten Holzkörper über einen Zeitraum von 1 bis 72 Stunden aushärtet.

18. Verfahren nach einem der Ansprüche 1 bis 17, **dadurch gekennzeichnet, dass** man den Holzkörper nach der Imprägnierung so fixiert, dass einer Veränderung der Form des Holzkörpers während der Aushärtung entgegengewirkt wird.

19. Holzkörper mit erhöhter Dauerhaftigkeit, Dimensionsstabilität und Oberflächenhärte, erhältlich nach einem Verfahren gemäß einem der Ansprüche 1 bis 18.

## Revendications

1. Procédé de préparation d'un corps en bois à durabilité, stabilité dimensionnelle et dureté de surface élevées, dans lequel on imprègne un corps en bois non traité au moyen d'une solution aqueuse
A) d'un agent d'imprégnation du groupe de la 1,3-bis(hydroxyméthyl)-4,5-dihydroxyimidazolidinone-2, de la 1,3-bis(hydroxyméthyl)-4,5-dihydroxyimidazolidinone-2 modifiée par un alcool en C₁-C₅, un polyol ou leurs mélanges, de la 1,3-diméthyl-4,5-dihydroxyimidazolidinone-2, de la diméthylolurée, de la bis(méthoxyméthyl)urée, de la tétraméthylolacétylènediurée, de la 1,3-bis(hydroxyméthyl)imidazolidinone-2, de la méthylolméthylurée ou de leurs mélanges, et
B) d'un catalyseur du groupe des sels métalliques ou d'ammonium, des acides organiques ou inorganiques ou de leurs mélanges,
**caractérisé en ce que**, après l'imprégnation, on durcit le corps en bois à une température élevée en maintenant des conditions humides.

2. Procédé suivant la revendication 1, **caractérisé en ce que**, comme agent d'imprégnation A), on utilise de la 1,3-bis(hydroxyméthyl)-4,5-dihydroxyimidazolidinone-2, de la 1,3-bis(hydroxyméthyl)-4,5-dihydroxyimidazolidinone-2 modifiée par un alcool en C₁-C₅, un polyol ou leurs mélanges, ou leurs mélanges.

3. Procédé suivant la revendication 1 ou 2, **caractérisé en ce que**, comme agent d'imprégnation A), on utilise de la 1,3-bis(hydroxyméthyl)-4,5-dihydroxyimidazolidinone-2 modifiée par un alcool en C₁-C₅, un polyol ou leurs mélanges.

4. Procédé suivant l'une des revendications 1 à 3, **caractérisé en ce qu'**on utilise simultanément un agent d'imprégnation C) du groupe d'un alcool en C₁-C₅, d'un polyol ou de leurs mélanges.

5. Procédé suivant la revendication 4, **caractérisé en ce qu'**on utilise simultanément du méthanol, de l'éthanol, du n-propanol, de l'iso-propanol, du n-butanol, du n-pentanol, de l'éthylèneglycol, du diéthylèneglycol, du 1,2-propylèneglycol, du 1,3-propylèneglycol, du 1,2-butylèneglycol, du 1,3-butylèneglycol, du 1,4-butylèneglycol, de la glycérine, des polyéthylèneglycols de la formule HO(CH₂CH₂O)ₙH, où n a une valeur de 3 à 20, ou leurs mélanges.

6. Procédé suivant la revendication 5, **caractérisé en ce qu'**on utilise simultanément du méthanol, du diéthylèneglycol ou leurs mélanges.

7. Procédé suivant l'une des revendications 1 à 6, **caractérisé en ce qu'**on applique l'agent d'imprégnation A), et éventuellement C), en une concentration de 1 à 60 % en poids dans 1a solution aqueuse.

8. Procédé suivant l'une des revendications 1 à 7, **caractérisé en ce que**, comme catalyseur B), on utilise des sels métalliques du groupe des halogénures métalliques, des sulfates métalliques, des nitrates métalliques, des tétrafluoroborates métalliques, des phosphates métalliques ou de leurs mélanges.

9. Procédé suivant la revendication 8, **caractérisé en ce que**, comme catalyseur B), on utilise des sels métalliques du groupe du chlorure de magnésium, du sulfate de magnésium, du chlorure de zinc, du chlorure de lithium, du bromure de lithium, du trifluorure de bore, du chlorure d'aluminium, du sulfate d'aluminium, du nitrate de zinc, du tétrafluoroborate de sodium ou de leurs mélanges.

10. Procédé suivant l'une des revendications 1 à 9, **caractérisé en ce que**, comme catalyseur B), on utilise des sels d'ammonium du groupe du chlorure d'ammonium, du sulfate d'ammonium, de l'oxalate d'ammonium, du phosphate diammonique ou de leurs mélanges.

11. Procédé suivant l'une des revendications 1 à 10, **caractérisé en ce que**, comme catalyseur B), on utilise des acides organiques ou inorganiques du groupe de l'acide maléique, de l'acide formique, de l'acide citrique, de l'acide tartrique, de l'acide oxalique, de l'acide p-toluènesulfonique, de l'acide chlorhydrique, de l'acide sulfurique, de l'acide borique ou de leurs mélanges.

12. Procédé suivant l'une des revendications 1 à 11, **caractérisé en ce que**, comme catalyseur B), on utilise du chlorure de magnésium.

13. Procédé suivant l'une des revendications 1 à 12, **caractérisé en ce qu'**on utilise le catalyseur B) en une concentration de 0,1 à 10 % en poids, par rapport à la quantité de l'agent d'imprégnation A), et éventuellement de C).

14. Procédé suivant l'une des revendications 1 à 13, **caractérisé en ce qu'**on durcit le corps en bois imprégné à une humidité relative de l'air de 50 à 100 %.

15. Procédé suivant la revendication 14, **caractérisé en ce qu'**on durcit le corps en bois imprégné à une humidité relative de l'air de 80 à 100 %.

16. Procédé suivant l'une des revendications 1 à 15, **caractérisé en ce qu'**on durcit le corps en bois imprégné à une température de 70 à 130°C.

17. Procédé suivant l'une des revendications 1 à 16, **caractérisé en ce qu'**on durcit le corps en bois imprégné pendant un espace de temps de 1 à 72 heures.

18. Procédé suivant l'une des revendications 1 à 17, **caractérisé en ce que**, après l'imprégnation, on fixe le corps en bois de façon à s'opposer à une modification de la forme du corps en bois pendant le durcissement.

19. Corps en bois à durabilité, stabilité dimensionnelle et dureté de surface élevées, que l'on peut obtenir suivant un procédé selon l'une des revendications 1 à 18.

## Claims

1. A process for the production of a wood body having high durability, dimensional stability and surface hardness, in which an untreated wood body is impregnated with an aqueous solution of
A) an impregnating agent from the group consisting of 1,3-bis(hydroxymethyl)-4,5-dihydroxyimidazolidin-2-one, 1,3-bis(hydroxymethyl)-4,5-dihydroxyimidazolidin-2-one modified with a C₁₋₅-alcohol, a polyol or mixtures thereof, 1,3-dimethyl-4,5-dihydroxyimidazolidin-2-one, dimethylolurea, bis(methoxymethyl)urea, tetramethylolacetylenediurea, 1,3-bis(hydroxymethyl)imidazolidin-2-one, methylolmethylurea or mixtures thereof, and
B) a catalyst from the group consisting of the metal or ammonium salts, organic or inorganic acids or mixtures thereof,
Wherein, after the impregnation, the wood body is hardened while maintaining humid conditions at elevated temperature.

2. The process according to claim 1, **characterized in that** the impregnating agent used is
A) 1,3-bis(hydroxymethyl)-4,5-dihydroxyimidazolidin-2-one, 1,3-bis(hydroxymethyl)-4,5-dihydroxyimidazolidin-2-one modified with a C₁₋₅-alcohol, a polyol or mixtures thereof, or mixtures thereof.

3. The process according to claim 1 or 2, **characterized in that** the impregnating agent used is A) 1,3-bis(hydroxymethyl)-4,5-dihydroxyimidazolidin-2-one modified with a C₁₋₅-alcohol, a polyol or a mixture thereof.

4. The process according to any of claims 1 to 3, **characterized in that** an impregnating agent C) from the group consisting of a C₁₋₅-alcohol, a polyol or mixtures thereof is concomitantly used.

5. The process according to claim 4, **characterized in that** methanol, ethanol, n-propanol, isopropanol, n-butanol, n-pentanol, ethylene glycol, diethylene glycol, 1,2- and 1,3-propylene glycol, 1,2-, 1,3- and 1,4-butylene glycol, glycerol, polyethylene glycols of the formula HO(CH₂CH₂O)ₙH, where n is from 3 to 20, or mixtures thereof are concomitantly used.

6. The process according to claim 5, **characterized in that** methanol, diethylene glycol or a mixture thereof is concomitantly used.

7. The process according to any of claims 1 to 6, **characterized in that** the impregnating agents A) and, if appropriate, C) are used in a concentration of from 1 to 60% by weight in the aqueous solution.

8. The process according to any of claims 1 to 7, **characterized in that** metal salts from the group consisting of metal halides, metal sulfates, metal nitrates, metal tetrafluoroborates, metal phosphates or mixtures thereof are used as catalyst B),

9. The process according to claim 8, **characterized in that** metal salts from the group consisting of magnesium chloride, magnesium sulfate, zinc chloride, lithium chloride, lithium bromide, boron trifluoride, aluminum chloride, aluminum sulfate, zinc nitrate, sodium tetrafluoroborate or mixtures thereof are used as catalyst B).

10. The process according to any of claims 1 to 9, **characterized in that** ammonium salts from the group consisting of ammonium chloride, ammonium sulfate, ammonium oxalate, diammonium phosphate or mixtures thereof are used as catalyst B).

11. The process according to any of claims 1 to 10, **characterized in that** organic or inorganic acids from the group consisting of maleic acid, formic acid, citric acid, tartaric acid, oxalic acid, p-toluenesulfonic acid, hydrochloric acid, sulfuric acid, boric acid or mixtures thereof are used as catalyst B).

12. The process according to any of claims 1 to 11, **characterized in that** magnesium chloride is used as catalyst B).

13. The process according to any of claims 1 to 12, **characterized in that** the catalyst B) is used in a concentration of from 0.1 to 10% by weight, based on the amount of the impregnating agents A) and, if appropriate, C).

14. The process according to any of claims 1 to 13, **characterized in that** the impregnated wood body is hardened at a relative humidity of from 50 to 100%.

15. The process according to claim 14, **characterized in that** the impregnated wood body is hardened at a relative humidity of from 80 to 100%.

16. The process according to any of claims 1 to 15, **characterized in that** the impregnated wood body is hardened at a temperature of from 70 to 130°C.

17. The process according to any of claims 1 to 16, **characterized in that** the impregnated wood body is hardened over a period of from 1 to 72 hours.

18. The process according to any of claims 1 to 17, **characterized in that**, after the impregnation, the wood body is fixed so that a change in the shape of the wood body during the hardening is counteracted.

19. A wood body having high durability, dimensional stability and surface hardness, obtainable by a process according to any of claims 1 to 18.
